# EUROPEAN PATENT SPECIFICATION

(11) **EP 3 945 358 B1**
(45) Date of publication and mention of the grant of the patent: **24.04.2024**
(21) Application number: 20188631.4
(22) Date of filing: 30.07.2020
(51) Int. Cl.: G02B 21/00, G02B 21/14, G02B 21/36

(54) **OBLIQUE PLANE MICROSCOPE AND METHOD FOR OPERATING THE SAME**
MIKROSKOP MIT SCHRÄGER EBENE UND VERFAHREN ZUM BETRIEB DESSELBEN
MICROSCOPE À PLAN OBLIQUE ET SON PROCÉDÉ DE FONCTIONNEMENT

(43) Date of publication of application: 02.02.2022
(73) Proprietor: Leica Microsystems CMS GmbH, 35578 Wetzlar (DE)
(72) Inventor: Schumann, Christian, 35423 Lich (DE)
(74) Representative: Schaumburg und Partner Patentanwälte mbB

(56) References cited:
- DE-A1-102016 204 653
- DE-B4-102016 103 182
- KUMAR SUNIL ET AL: "Application of oblique plane microscopy to high speed live cell imaging", ADVANCED MICROSCOPY TECHNIQUES II, SPIE, 1000 20TH ST. BELLINGHAM WA 98225-6705 USA, vol. 8086, no. 1, 9 June 2011 (2011-06-09) , pages 1-5, XP060015109, DOI: 10.1117/12.889841 [retrieved on 2020-01-20]
- MICHAEL CHEN ET AL: "3D differential phase contrast microscopy", BIOMEDICAL OPTICS EXPRESS, vol. 7, no. 10, 1 October 2016 (2016-10-01), page 3940, XP055658383, United States ISSN: 2156-7085, DOI: 10.1364/BOE.7.003940

## Description

### Technical field

The present invention relates to an oblique plane microscope and a method for operating the same.

### Background

Light sheet fluorescence microscopy is a technique in which a thin slice of a sample is illuminated with a specific excitation light distribution which is focused only in one direction for example by using a cylindrical lens. Another illumination method uses a collimated light beam which is scanned in one direction to create a light distribution forming a light sheet. Due to the fact that only a portion of the sample is illuminated which is actually observed, light sheet fluorescence microscopy reduces photodamage and stress induced on a living sample. Furthermore, in contrast to confocal laser scanning microscopy where the sample is scanned point by point, light sheet fluorescence microscopy is a wide field technique which allows to generate a three-dimensional stack of images based on optical sections through different planes of the sample.

In a common approach, a light sheet fluorescence microscope comprises separate objectives for illuminating the sample with the light sheet and for observing the illuminated object plane. Recently, light sheet methods have been developed which use only one objective both for illumination and detection. For example, by illuminating a small spot of an aperture of a high NA objective, a tilted light sheet may be generated. Thus, an oblique object plane is imaged using a tilted detector configuration. This technique is known as "oblique plane microscopy" (OPM). Conventional OPM configurations are disclosed for example in US 8 582 203 B2 and DE 10 2016 103 182 B4. An extension of OPM called "swept confocally aligned planar excitation microscopy" (SCAPE) has been developed by using a scanning microscope for moving both the light sheet and the object plane to be imaged.

As a kind of fluorescence microscope, an oblique plane microscope is configured to detect only fluorescence-labelled sample structures which are located in the oblique object plane illuminated with the light sheet. Thus, an oblique plane microscope is usually not suitable to detect unlabeled structures in a sample region putting the fluorescence-labelled sample structures in a biological context.

For this purpose, DE 10 2016 204 653 A1 proposes a light sheet microscope comprising two separated objectives for light sheet illumination and detection which are located on one side of a microscope slide on which the sample is arranged, whereas a wide field illumination system is located on the other side of the microscope slide. The optical axes of the two objectives for light sheet illumination and detection are tilted relative to a surface normal of the microscope slide. In contrast, the optical axis of the wide field illumination system is collinear with the surface normal of the microscope slide. Thus, the optical axes of the objectives are not collinear with the optical axis of the wide field illumination system.

Generally, the microscope slide has a refractive index which is different from a refractive index of the sample and from a refractive index of an immersion medium in which the sample is located. Thus, due to the fact that the detection objective images obliquely through the microscope slide, a significant coma aberration occurs as explained e.g. in the article of Stallinga, "Compact description of substrate-related aberrations in high numerical-aperture optical disk readout", Applied Optics 44 (2005), pages 849-858. It may be possible to compensate for such an aberration using optical means as disclosed e.g. in DE 10 2016 212 020 A1. However, the compensation is technically complex and prone to error.

An oblique plane microscope according to the preamble of claim 1 is disclosed in the article of Kumar et al., "Application of oblique plane microscopy to high speed live cell imaging", ADVANCED MICROSCOPY TECHNIQUES II, SPIE, 1000 20th St. Bellingham WA 98225-6705, USA, vol. 8086, no. 1, 9 June 2011 (2011-06-09), pages 1-5, XP060015109, DOl: 10.1117/12.889841.

### Summary

It is an object of the present invention to provide an oblique plane microscope and a method for operating an oblique plane microscope which allow a high-quality imaging of a sample region including an object plane illuminated with the light sheet.

The afore-mentioned object is achieved by the subject-matter according to the independent claims. Advantageous embodiments are defined in the dependent claims and the following description.

According to an embodiment, an oblique plane microscope comprises a single objective configured to project a light sheet into an object plane of a sample and to collect detection light from the object plane which is oblique relative to an optical axis of the objective, an image erecting system configured to focus the detection light collected by the objective onto an image plane which is oblique relative to the optical axis of the objective, and a transmitted light illumination system configured to emit illumination light onto the sample. The transmitted light illumination system is located on an opposite side of the sample with respect to the objective. The objective is further configured to collect the illumination light transmitted through the sample.

The imaging erecting system is configured to focus the transmitted illumination light collected by the objective onto the image plane for generating a transmitted light contrast image of the sample.

The oblique plane microscope as proposed herein uses an image erecting system together with a transmitted light illumination in order to generate a transmitted light contrast image of the sample. Thus, the oblique plane microscope takes advantage of an oblique image detection which is inherent to the image erecting system. Accordingly, a transmitted light contrast image can be acquired, said contrast image putting the oblique object plane which is illuminated with the light sheet in a biological context given by unlabeled structures in the sample. The transmitted light contrast image can be used as an overview image which enables a user to find a suitable ROI of the sample easily.

An optical axis of the transmitted light illumination system may be non-perpendicular to the object plane which is imaged on the image plane. Preferably, the optical axis of the transmitted light illumination system is coaxial or at least in parallel with the optical axis of the single objective.

The oblique plane microscope may also be applied to a SCAPE configuration where the oblique light sheet is swept through the sample using e.g. a scanning mirror and images of the illuminated plane are captured as the plane sweeps. Thus, volumetric images of the sample can be acquired.

The image erecting system may be configured to render phase information and/or amplitude information visible in the transmitted light contrast image. In particular, phase information included in the transmitted light contrast image can advantageously be used for overview imaging of transparent biological samples which are otherwise difficult to image.

The oblique plane microscope may further comprise a processor which is configured to evaluate the transmitted light contrast image in terms of phase information and/or amplitude information included in the transmitted light contrast image. For instance, a refractive index distribution may be determined based on the evaluation of the contrast image.

The oblique plane microscope may comprise an asymmetrical detection pupil which defines an effective detection angular range distributed asymmetrically with respect to an optical axis being perpendicular to the image plane or the object plane. The asymmetrical detection pupil is caused by the tilted configuration of the image erecting system which is used to image the oblique object plane without any distortion onto the image plane. As a result, transmitted light contrast imaging is possible based on a configuration which is for the most part already inherent to the oblique plane microscope. Accordingly, the proposed solution requires no greater technical effort to implement the desired contrast imaging in light sheet microscopy.

Preferably, the processor is configured to determine imaging characteristics of the oblique plane microscope taking into account the asymmetrical detection pupil and to evaluate the transmitted light contrast image based on the imaging characteristics.

For example, the processor may be configured to determine a phase transfer function and/or an amplitude transfer function representing the imaging characteristics.

According to a further embodiment, the processor may be configured to apply an inverse numerical method for determining specimen information based on a numerical model representing the imaging characteristics.

In a preferred embodiment, the oblique plane microscope may comprise an optical element configured to vary a detection azimuth of the oblique object plane which is imaged onto the image plane. Acquiring transmitted light contrast images based on different detection azimuths allows to utilize different asymmetrical detection pupils e.g. for reconstructing a refractive index distribution of the sample. The afore-mentioned optical element may be formed by an image rotator such as an Abbe-König rotator which is included in the optical transport system.

In another embodiment, the oblique plane microscope my comprise means to vary the angular spectrum of the transmitted light illumination, i. e. LED arrays or scanning systems, as known from methods like DPC (differential phase contrast)

Preferably, the oblique plane microscope comprises a scanning device which is configured to scan the oblique object plane, which is imaged onto the image plane, through the sample for generating a stack of transmitted light contrast images. The scanning device may be formed by a tiltable mirror which is used to move the imaged the object plane laterally, i.e. in a direction transverse to the optical axis of the objective, through the sample. Thus, volume imaging of the sample can be achieved. Alternatively, the scanning device can be formed by a focusing device at an appropriate position in the oblique plane microscope, i.e. the specimen-side objective or a lens group in the optical transport system. Furthermore, lateral scanning in the sample can be achieved by using a motorized object stage.

In a preferred embodiment, the scanning device is configured to generate a first stack of transmitted light contrast images in accordance with a first detection azimuth and to generate a second stack of transmitted light contrast images in accordance with a second detection azimuth which is different from the first detection azimuth. The processor is configured to determine a three-dimensional refractive index distribution of the sample based on the first and second stacks of transmitted light contrast images. By providing at least two image stacks in accordance with different detection azimuths, a quantitative phase information can be acquired.

The transmitted light illumination system may comprise a condenser system, an optical axis thereof being coaxial or at least in parallel with the optical axis of the single objective. Thus, a compact optical design can be achieved.

The optical axis of the single objective and the optical axis of the condenser system may be perpendicular to a sample carrier on which the sample is arranged. Using such an orthogonal arrangement avoids coma aberration from occurring.

According to a preferred embodiment, the imaging erecting system comprises an optical transport system which is configured to image the object plane onto an intermediate image plane and an optical detection system which is configured to image the intermediate image onto the image plane. The optical axes of the optical transport system and the optical detection system intersect each other in the intermediate image plane at a tilt angle.

Preferably, the optical axis of the optical detection system is perpendicular to both the intermediate image plane and the image plane.

According to another aspect, a method for operating an oblique plane microscope is provided, wherein the oblique plane microscope comprises a single objective configured to project a light sheet into an object plane of a sample and to collect detection light from the object plane which is oblique relative to an optical axis of the objective, and an image erecting system configured to focus the detection light collected by the objective onto an image plane which is oblique relative to the optical axis of the objective. The method comprises the following steps: emitting illumination light onto the sample by means of a transmitted light illumination system, said transmitted light illumination system being located on an opposite side of the sample with respect to the objective collecting the illumination light transmitted through the sample by means of the objective; and focusing the transmitted illumination light collected by the objective by means of the image erecting system onto the image plane for generating a transmitted light contrast image of the sample.

### Short Description of the Figures

Hereinafter, specific embodiments are described referring to the drawings, wherein:
- Figure 1: is a schematic diagram of an oblique plane microscope comprising a transmitted light illumination system according to an embodiment;
- Figure 2: is a diagram showing an angular space which includes angular ranges for transmitted light illumination, transport imaging and image detection in the oblique plane microscope,
- Figure 3: is a diagram showing an amplitude transfer function determined by a processor of the oblique plane microscope,
- Figure 4: is a diagram showing a phase transfer function determined by the processor of the oblique plane microscope,
- Figure 5: is a schematic diagram of an oblique plane microscope according to another embodiment, and
- Figure 6: is a flow diagram illustrating a method for determining a refractive index distribution by means of the oblique plane microscope shown in Figure 5.

### Detailed Description

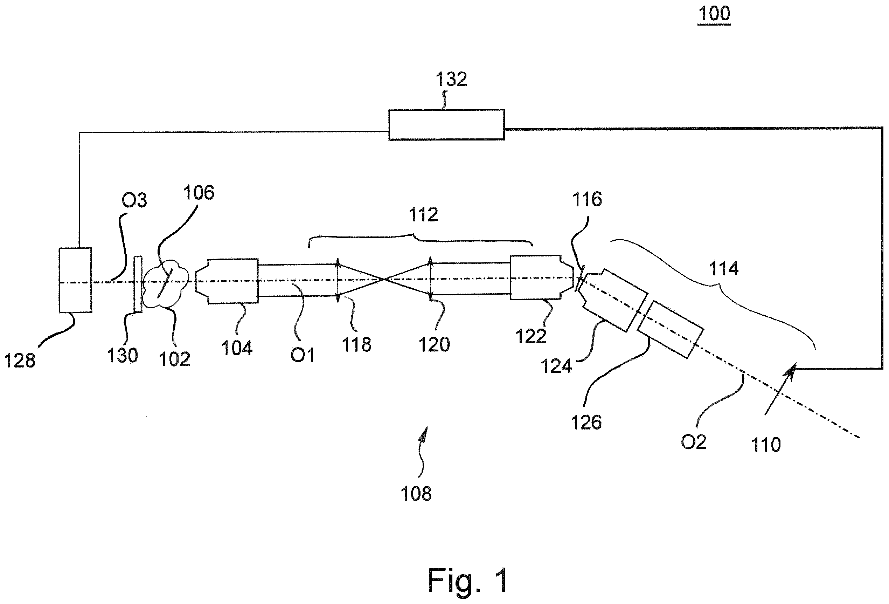

Figure 1 shows an oblique plane microscope 100 according to an embodiment. The oblique plane microscope 100 is configured to illuminate a sample 102 with a light sheet and to form an optical image of the sample 102 illuminated with the light sheet. It is to be noted that Figure 1 illustrates only those features of the oblique plane microscope 100 which may help to understand the operating principle. Of course, the oblique plane microscope 100 may comprise additional components not shown in Figure 1. For instance, Figure 1 does not show specific components which are arranged to generate an initial illumination light distribution which is then projected into the sample 102 in form of the light sheet. Such components may comprise a cylindrical lens which focuses an illumination light beam in only one direction in order to form an illumination light distribution of a light sheet type. Alternatively, a scanning element may be used to move an illumination light beam across a plane for generating a quasi-static light sheet.

The oblique plane microscope 100 comprises a single objective 104 which is configured to project the light sheet into an object plane 106 of the sample 102 and to collect detection light emerging from the illuminated object plane 106. The detection light may be formed by fluorescent radiation which is excited by irradiating the light sheet into the sample 102. Accordingly, the objective 104 is used for both illumination and detection.

According to an OPM configuration, the illuminated object plane 106 is oblique, i.e. tilted relative to an optical axis O1 of the objective 104. For achieving such an inclined orientation of the light sheet within the sample 102, the illumination light may be directed into an eccentric partial area of the objective 102 so that the objective 102 emits the illumination light along an illumination direction which is inclined relative to the optical of axis O1 the objective 104. An opposite partial area of the objective 104 is then used for collecting the detection light from the illuminated object plane 106.

The oblique plane microscope 100 further comprises an image erecting system generally designated by reference sign 108 in Figure 1. The image erecting system 108 serves to image the oblique object plane 106 onto an image plane 110 in which an image sensor may be arranged for detecting an optical image of the object plane 106 without any distortion which would otherwise occur due to the inclination of the object plane 106 relative to the optical axis O1 of the objective 104. Specifically, the image erecting system 108 may comprise an optical transport system 112 and an optical detection system 114 in this order as seen from the sample 102. The transport system 112 is in coaxial alignment with the objective 104, and an optical axis O2 of the detection system 114 is tilted relative to the optical axis O1 of the optical transport system 112.

The optical transport system 112 is configured to image the oblique object plane 106 onto an intermediate image plane 116 which is located in an intermediate image space between the optical transport system 112 and the optical detection system 114. An intermediate image of the object plane 106 formed in the intermediate image plane 116 is then imaged by means of the detection system 114 onto the image plane 110. Since the optical axis O2 of the detection system 114 is perpendicular to both the intermediate image plane 116 and the image plane 110, the image erecting system 108 enables distortion-free imaging of the oblique object plane 106 onto the image sensor located in the image plane 110.

The intermediate image plane 116 may also be utilized for projecting the light sheet into the object plane 106. Thus, an illumination system (not shown in Figure 1) may be configured to irradiate the light sheet into the intermediate image plane 106, and the transport system 112 may then be used to image the light sheet located in the intermediate image plane 116 onto the object plane 106 of the sample 102.

More specifically, the transport system 112 may comprise a tube lens 118, a relay lens 120 and an intermediate imaging lens system 122 in this order as seen from the sample 102. The detection system 114 may comprise a further objective-like short focal length lens system 124 and a tube lens 126 in this order as seen from the sample 102. The optical axis O1 of the transport system 112 and the optical axis O2 of the detection system 114 intersect each other in the intermediate image plane 116 at a tilt angle which corresponds to the inclination of the object plane 106 relative to the optical axis O1.

The oblique plane microscope 100 shown in Figure 1 further comprises a transmitted light illumination system 128 which is located on an opposite side of the sample 102 with respect to the objective 104. In other words, the objective 104 and the transmitted light illumination system 128 are arranged on opposite sides of the sample 102. An optical axis O3 of the transmitted light illumination system 128 is coaxial or at least in parallel with the optical axis O1 of the objective 104. The transmitted light illumination system 128 may comprise a condenser system and serves to emit illumination light onto the sample 102 in order to implement transmitted light illumination of the sample 102. For this purpose, the sample 102 may be located on a sample carrier 130 which is transparent to allow the illumination light which is emitted by the transmitted light illumination system 128 to pass the sample carrier 130 for illuminating the sample 102. In this respect, it is assumed that also the sample 102 is at least to a certain degree transparent so that the illumination light passing through the sample can be collected by the objective 104. According to the configuration shown in Figure 1, both the optical axis O1 of the objective 104 and the optical axis O2 of the transmitted light illumination system 128 are perpendicular to the sample carrier 130 on which the sample 102 is arranged.

The objective 104 collects the illumination light which is emitted by the transmitted light illumination system 128 and passes through the sample 102. Thus, the illumination light transmitted through the sample 102 is supplied to the image erecting system 108 which focuses the transmitted illumination light onto the image plane 110 for generating a transmitted light contrast image of the sample 102. Accordingly, the objective 104 and the image erecting system 108 allow the oblique plane 106 of the sample 102 to be imaged in transmitted light onto the image plane 110. Assumed that the light sheet illumination is used for imaging fluorescence-labelled sample structures in the object plane 106, imaging the sample 102 in transmitted light allows to detect a sample region which puts the fluorescence-labelled sample structures in a wider biological context. For instance, by imaging the sample 102 in transmitted light, an overview image of the sample 102 including unlabeled structures may be acquired which makes it easier to find a suitable ROI of the sample 102.

As can be seen from Figure 1, the image erecting system 108 utilizes a tilted configuration for imaging the sample 102 onto the image plane 110. Thus, an oblique light detection is implemented which can be utilized to render phase information and/or amplitude information visible in the transmitted light contrast image.

A processor 132 may be provided which serves to control an overall operation of the oblique plane microscope 100. In particular, the processor 132 may be used to evaluate the transmitted light contrast image which is generated by means of the transmitted light illumination system 128 in terms of phase information and/or amplitude information included in the contrast image. For this purpose, the process of evaluating the contrast image may use the fact that the oblique plane microscope 100 comprises an asymmetrical detection pupil due to the tilted configuration which enables the oblique object plane 106 to be imaged without any distortion onto the image plane 110. The asymmetrical detection pupil defines an effective detection angular range which is distributed asymmetrically with respect to the optical axis O2 of the detection system 114. In other words, in order to evaluate the contrast image, the processor 132 utilizes the oblique light detection which is inherent to the oblique plane microscope 100.

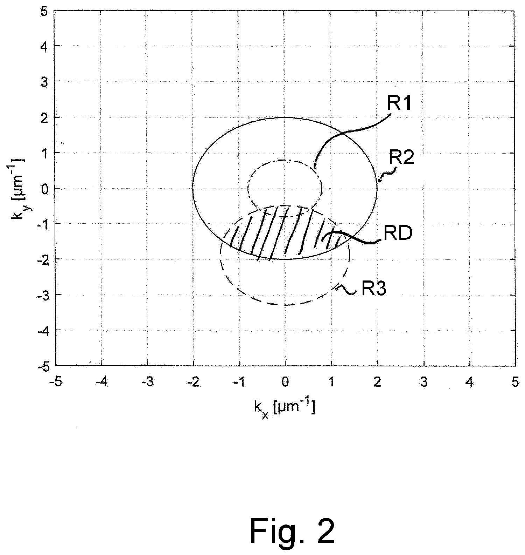

Figure 2 illustrates the effective detection angular range provided in an exemplary embodiment of the oblique plane microscope 100. The diagram of Figure 2 shows a two-dimensional angular space, x and y axes thereof being defined by wave vectors k_{X} and k_{X}, respectively. The angular space shown in Figure 2 includes an angular range R1 (dotted line) associated with the transmitted light illumination provided by the transmitted light illumination system 128, an angular range R2 (solid line) associated with the transport imaging from the sample 102 to the intermediate image plane 116 performed by the transport system 112, and an angular range R3 (dashed line) associated with the oblique image detection on the image plane 110. In Figure 2, the asymmetrical detection pupil is represented by a hatched overlap range RD between the angular range R2 associated with the transport imaging and the angular range R3 associated with the oblique image detection. As can be seen from Figure 2, the overlap range RD is asymmetrical with respect to the center of the angular range R3, said center representing the optical axis O2 of the detection system 114 which is perpendicular to the image plane 110.

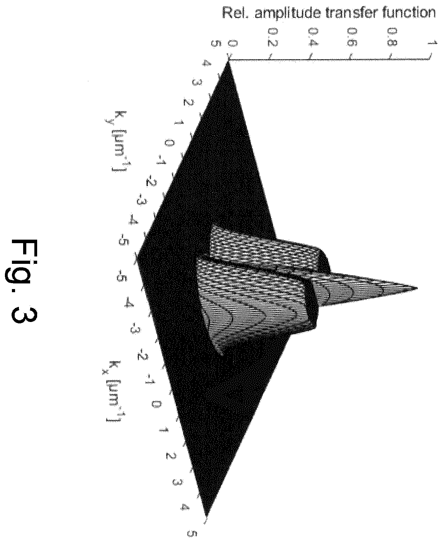

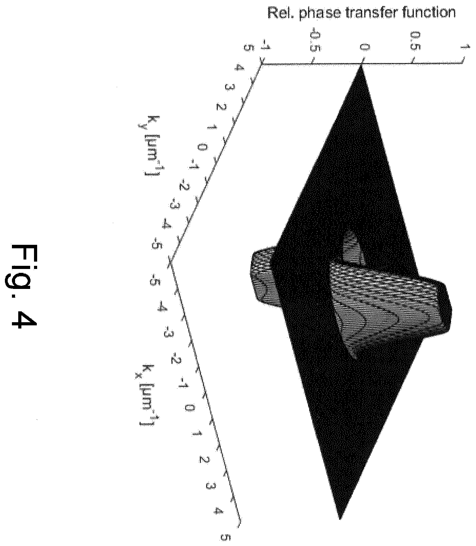

Based on the oblique light detection as illustrated in Figure 2, the processor 132 may be configured to determine imaging characteristics of the oblique plane microscope 100. For instance, the processor 132 may calculate an amplitude transfer function as illustrated in Figure 3 and a phase transfer function as illustrated in Figure 4. The optical transfer functions shown in Figures 3 and 4 may be determined according to an approximation for thin and weakly scattering samples by analogy to an approach as explained in Chen et al., "3D differential phase contrast microscopy, Biomedical Optics Express, Vol. 7. No. 10, 2016, pages 3940- 3950". The transfer functions of Figures 3 and 4 were calculated based on exemplary values for apertures and tilt angles provided in the oblique plane microscope 100.

Specifically, the phase transfer function in Figure 4 clearly shows the phase sensitivity of the approach disclosed herein. Thus, the phase transfer function exhibits only a zero for a line which is assigned to the tilt direction of the optical axis O2 and the optical axis O1 the detection system 114. In other words, the transmitted light contrast image is phase-sensitive essentially in its entirety except for one direction.

A determination of the imaging characteristics of the oblique plane microscope 100 based on optical transfer functions as shown in Figures 3 and 4 is to be understood merely as an example. Thus, the processor 132 may also apply an inverse numerical method to determine a numerical model which represents the imaging characteristics.

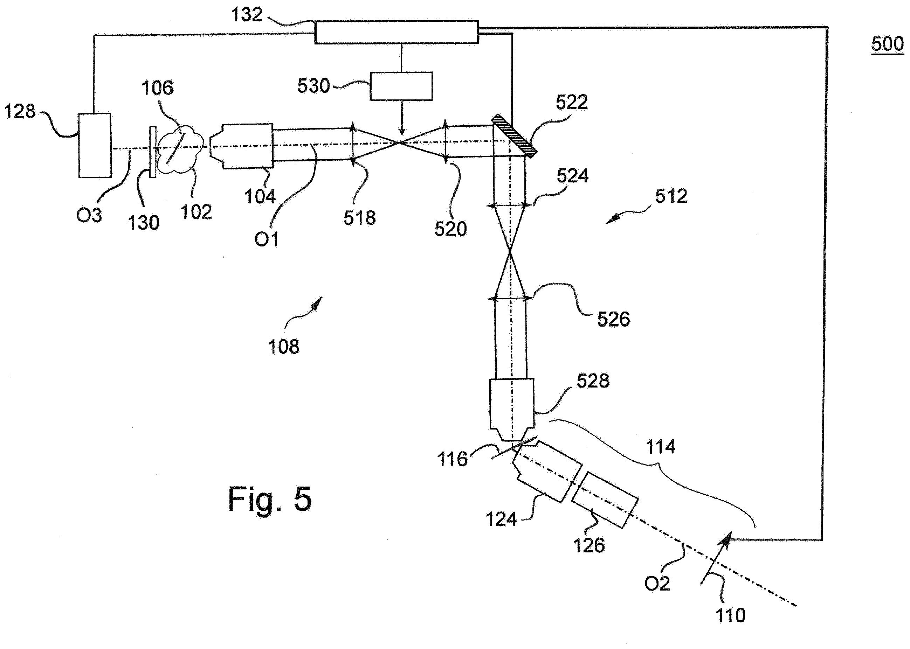

Figure 5 shows an oblique plane microscope 500 according to another embodiment. The oblique plane microscope 500 differs from the configuration shown in Figure 1 essentially in that the image erecting system 108 comprises an optical transport system 512 which is modified compared to the transport system 112 by including a scanning device 522 which is operated to scan the oblique object plane 106 through the sample 102.

Specifically, the optical transport system 512 includes, in this order as seen from the sample 102, a tube lens 518, an ocular lens 520, the scanning device 522, an ocular lens 524, a tube lens 526 and an intermediate imaging lens system 528. Apart from the additional functionality provided by the scanning device 522, the optical transport system 512 operates essentially in the same manner as described above with reference to the optical transport system 112 shown in Figure 1. In particular, the transport system 512 serves to image the oblique object plane 106 onto the intermediate image plane 116 which is located between the objectives 124, 528.

The scanning device 522 may be formed by a galvanometer mirror or a MEMS mirror which is movable around a tilt axis for scanning the sample 102 with the light sheet in a lateral direction, i.e. transversely to the optical axis O1 of the objective 104. Accordingly, the scanning device 522 can be used for scanning the oblique object plane 106, which is imaged onto the image plane 110, through the sample 102 in order to generate a stack of images, each of these images being a transmitted light contrast image as described above. In particular, each transmitted light contrast image is generated by means of the image erecting system 108 in such a way that phase information and/or amplitude information is rendered visible. Thus, each transmitted light contrast image can be evaluated by means of the processor 132 in terms of the phase information and/or the amplitude information included therein.

The oblique plane microscope 500 shown in Figure 5 may further comprise an optical element 530 which is configured to vary a detection azimuth of the oblique object plane 106 which is imaged onto the image plane 110. Referring to a polar coordinate system with a polar axis formed by the optical axis O1 of the objective 104, the detection azimuth is to be understood as an azimuthal angle defining a rotational orientation of the object plane 106 around the optical axis O1 of the objective 104. When the detection azimuth is varied by means of the optical element 530, the object plane 106 is rotated in its entirety around the optical axis O with an polar angle remaining unchanged.

For example, the optical element 530 may be formed by an image rotation unit such as an Abbe-König rotator which is located between the two lenses 518, 520 of the transport system 512. As illustrated in Figure 5 by an arrow, the optical element 530 may be selectively insertable into the optical path of the transport system 512. Needless to say that the optical element 530 may also be permanently installed in the transport system 512.

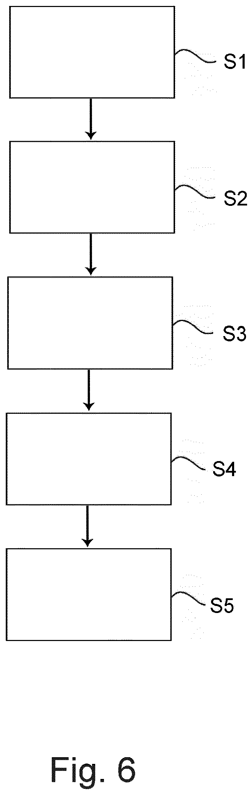

Generating a plurality of images stacks based on different detection azimuths can be used to determine a three dimensional refractive index distribution of the sample 102 as illustrated in the flow diagram of Figure 6. By using a plurality of image stacks based on different detection azimuths, the zero of the phase transfer function in the tilt direction of the optical axes O1 and O2 can be removed, and phase sensitivity over the complete angular spectrum except for the origin can be restored.

In step S1, the processor 132 controls the optical element 530 to set a first detection azimuth based on which staple imaging is be performed.

In step S2, the processor 132 controls the scanning device 522 to scan the object plane 106 laterally through the sample 102. At the same time, the sample 102 is illuminated by the transmitted light illumination system 128. As a result, a first stack of transmitted light contrast images is generated in accordance with the first detection azimuth under transmitted light illumination of the sample 102.

In step S3, the processor 132 controls the optical element 530 to set a second detection azimuth based on which staple imaging is to be performed.

In step S4, the processor 132 controls the scanning device 522 to scan the object plane 106 laterally through the sample 102. At the same time, the sample 102 is illuminated by the transmitted light illumination system 128. As a result, a second stack of transmitted light contrast images is generated in accordance with the second detection azimuth under transmitted light illumination of the sample 102.

In step S5, the processor 132 calculates a three dimensional refractive index distribution of the sample 102 based on an evaluation of the first and second image stacks. For this purpose, the processor 132 may utilize in step S5 the imaging characteristics of the oblique plane microscope 500 which can be determined as described above. Thus, amplitude and phase transfer functions may be used, and/or an inverse numerical method may be applied to determine a numerical model representing the imaging characteristics. Further, the processor 132 may calculate a synthetic image stack taking into account the imaging characteristics of the oblique plane microscope 500, wavelengths of the light used, tilt angles, apertures, wavefront data etc.

For instance, by providing at least two image stacks based on different detection azimuths, zeros of the phase transfer function can be eliminated throughout the angular space, i.e. for all wave vectors apart from a wave vector which is assigned to the optical axis O2 of the detection system 114. A co-registration of the images by means of shear and rotation operations can be performed by applying suitable image processing methods which are known in the art. In addition, acquiring multiple image stacks allows to compare measured data of the sample beyond an approximation for thin and weakly scattering samples. For example, beam propagation or wave propagation methods may be used as disclosed in Ma et al., Opt. Express 25 (2017), 22595.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100: the oblique plane microscope
- 102: sample
- 104: objective
- 106: object plane
- 108: image erecting system
- 110: image plane
- 112: optical transport system
- 114: optical detection system
- 116: intermediate image plane
- 118: tube lens
- 120: relay lens
- 122: intermediate imaging lens system
- 124: lens system
- 126: objective
- 128: transmitted light illumination system
- 130: sample carrier
- 132: processor
- 500: oblique plane microscope
- 512: optical transport system
- 518: tube lens
- 520: ocular lens
- 522: scanning device
- 524: tube lens
- 526: ocular lens
- 528: intermediate imaging objective
- 530: optical element
- O1, O1, O3: optical axes
- R1, R2, R3, RD: angular ranges

## Claims

1. An oblique plane microscope (100, 500), comprising:
a single objective (104) configured to project a light sheet into an object plane (106) of a sample (102) and to collect detection light from the object plane (106) which is oblique relative to an optical axis (O1) of the objective (104), and
an image erecting system (108) configured to focus the detection light collected by the objective (104) onto an image plane (110) which is oblique relative to the optical axis (O1) of the objective (104),
**characterized by** a transmitted light illumination system (128) configured to emit illumination light onto the sample (102), said transmitted light illumination system (128) being located on an opposite side of the sample (102) with respect to the objective (104),
wherein the objective (104) is further configured to collect the illumination light transmitted through the sample (102), and
wherein the image erecting system (108) is further configured to focus the transmitted illumination light collected by the objective (104) onto the image plane (110) for generating a transmitted light contrast image of the sample (102).

2. The oblique plane microscope (100, 500) according to claim 1, wherein the image erecting system (108) is configured to render phase information and/or amplitude information visible in the transmitted light contrast image.

3. The oblique plane microscope (100, 500) according to claim 1 or 2, further comprising a processor (132) configured to evaluate the transmitted light contrast image in terms of phase information and/or amplitude information included in the transmitted light contrast image.

4. The oblique plane microscope (100, 500) according to one of the preceding claims, further comprising an asymmetrical detection pupil which defines an effective detection angular range distributed asymmetrically with respect to an optical axis (O2) being perpendicular to the image plane (110) or asymmetrically with respect to an optical axis (O1) of the objective 104.

5. The oblique plane microscope (100, 500) according to claim 4, wherein the processor (132) is configured to determine imaging characteristics of the oblique plane microscope represented by a phase transfer function and/or an amplitude transfer function taking into account the asymmetrical detection pupil and to evaluate the transmitted light contrast image based on the imaging characteristics.

6. The oblique plane microscope (500) according to one of the preceding claims, further comprising an optical element (530) configured to vary a detection azimuth of the oblique object plane (106) which is imaged onto the image plane (110).

7. The oblique plane microscope (500) according to one of the preceding claims, further comprising a scanning device (522) configured to scan the oblique object plane (106), which is imaged onto the image plane (110), through the sample (102) for generating a stack of transmitted light contrast images.

8. The oblique plane microscope (500) according to claim 7, wherein the scanning device (522) is configured to generate a first stack of transmitted light contrast images in accordance with a first detection azimuth and to generate a second stack of transmitted light contrast images in accordance with a second detection azimuth which is different from the first detection azimuth, and wherein the processor (132) is configured to determine a three dimensional refractive index distribution of the sample (102) based on the first and second stacks of transmitted light contrast images.

9. The oblique plane microscope (100, 500) according to one of the preceding claims, wherein the optical axis (O1) of the single objective (104) and the optical axis of the transmitted light illumination system (128) are perpendicular to a sample carrier (130) on which the sample (102) is to be arranged.

10. The oblique plane microscope (100, 500) according to one of the preceding claims, wherein the image erecting system (108) comprises an optical transport system (112, 512) configured to image the object plane (106) onto an intermediate image plane (116) and an optical detection system (114) configured to image the intermediate image onto the image plane (110), wherein the optical axes (O1, 02) of the optical transport system (112, 512) and the optical detection system (114) intersect each other in the intermediate image plane (116) at a tilt angle.

11. The oblique plane microscope (100, 500) according to claim 10, wherein the optical axis of the optical detection system (114) is perpendicular to both the intermediate image plane (116) and the image plane (110).

12. The oblique plane microscope (100, 500) according to one of the preceding claims, wherein an optical axis (O3) of the transmitted light illumination system (128) is non-perpendicular to the object plane (106).

13. A method for operating an oblique plane microscope (100, 500), said oblique plane microscope (100, 500) comprising:
a single objective (104) configured to project a light sheet into an object plane (106) of a sample (102) and to collect detection light from the object plane (106) which is oblique relative to an optical axis (O1) of the objective (104), and
an image erecting system (108) configured to focus the detection light collected by the objective (104) onto an image plane (110) which is oblique relative to the optical axis (O1) of the objective (104),
wherein the method comprises following steps:
emitting illumination light onto the sample (102) by means of a transmitted light illumination system (128), said transmitted light illumination system (128) being located on an opposite side of the sample (102) with respect to the objective (104),
collecting the illumination light transmitted through the sample (102) by means of the objective (104), and
focussing the transmitted illumination light collected by the objective (104) by means of the image erecting system (108) onto the image plane (110) for generating a transmitted light contrast image of the sample (102).

## Patentansprüche

1. Mikroskop (100, 500) mit schräger Ebene, umfassend:
ein einzelnes Objektiv (104), das ausgebildet ist, ein Lichtblatt in eine Objektebene (106) einer Probe (102) zu projizieren und Erfassungslicht von der Objektebene (106) zu sammeln, die relativ zu einer optischen Achse (O1) des Objektivs (104) schräg ist, und
ein Bildaufrichtungssystem (108), das ausgebildet ist, das von dem Objektiv (104) gesammelte Erfassungslicht auf eine Bildebene (110) zu fokussieren, die relativ zu der optischen Achse (O1) des Objektivs (104) schräg verläuft, **gekennzeichnet durch** ein Durchlicht-Beleuchtungssystem (128), das ausgebildet ist, Beleuchtungslicht auf die Probe (102) zu emittieren, wobei das Durchlicht-Beleuchtungssystem (128) auf einer in Bezug auf das Objektiv (104) gegenüberliegenden Seite der Probe (102) angeordnet ist,
wobei das Objektiv (104) ferner ausgebildet ist, das durch die Probe (102) übertragene Beleuchtungslicht zu sammeln, und
wobei das Bildaufrichtungssystem (108) ferner ausgebildet ist, das von dem Objektiv (104) gesammelte Durchlicht auf die Bildebene (110) zu fokussieren, um ein Durchlichtkontrastbild der Probe (102) zu erzeugen.

2. Mikroskop (100, 500) mit schräger Ebene nach Anspruch 1, wobei das Bildaufrichtungssystem (108) ausgebildet ist, Phaseninformationen und/oder Amplitudeninformationen in dem Durchlichtkontrastbild sichtbar zu machen.

3. Mikroskop (100, 500) mit schräger Ebene nach Anspruch 1 oder 2, ferner mit einem Prozessor (132), der ausgebildet ist, das Durchlichtkontrastbild in Bezug auf die in dem Durchlichtkontrastbild enthaltene Phaseninformation und/oder Amplitudeninformation auszuwerten.

4. Mikroskop (100, 500) mit schräger Ebene nach einem der vorhergehenden Ansprüche, ferner mit einer asymmetrischen Detektionspupille, die einen effektiven Detektionswinkelbereich definiert, der asymmetrisch in Bezug auf eine optische Achse (O2), die senkrecht zur Bildebene (110) steht, oder asymmetrisch in Bezug auf eine optische Achse (O1) des Objektivs 104 verteilt ist.

5. Mikroskop (100, 500) mit schräger Ebene nach Anspruch 4, wobei der Prozessor (132) ausgebildet ist, Abbildungseigenschaften des Mikroskops mit schräger Ebene, die durch eine Phasenübertragungsfunktion und/oder eine Amplitudenübertragungsfunktion dargestellt werden, unter Berücksichtigung der asymmetrischen Erfassungspupille zu bestimmen und das Durchlichtkontrastbild auf der Grundlage der Abbildungseigenschaften auszuwerten.

6. Mikroskop (500) mit schräger Ebene nach einem der vorhergehenden Ansprüche, ferner mit einem optischen Element (530), das ausgebildet ist, einen Erfassungsazimut der schrägen Objektebene (106), die auf die Bildebene (110) abgebildet wird, zu variieren.

7. Mikroskop (500) mit schräger Ebene nach einem der vorhergehenden Ansprüche, ferner mit einer Abtastvorrichtung (522), die ausgebildet ist, die schräge Objektebene (106), die auf die Bildebene (110) abgebildet wird, durch die Probe (102) abzutasten, um einen Stapel von Durchlichtkontrastbildern zu erzeugen.

8. Mikroskop (500) mit schräger Ebene nach Anspruch 7, wobei die Abtastvorrichtung (522) ausgebildet ist, einen ersten Stapel von Durchlichtkontrastbildern in Übereinstimmung mit einem ersten Erfassungsazimut zu erzeugen und einen zweiten Stapel von Durchlichtkontrastbildern in Übereinstimmung mit einem zweiten Erfassungsazimut zu erzeugen, der sich von dem ersten Erfassungsazimut unterscheidet, und wobei der Prozessor (132) ausgebildet ist, eine dreidimensionale Brechungsindexverteilung der Probe (102) auf der Grundlage des ersten und des zweiten Stapels von Durchlichtkontrastbildern zu bestimmen.

9. Mikroskop (100, 500) mit schräger Ebene nach einem der vorhergehenden Ansprüche, wobei die optische Achse (O1) des Einzelobjektivs (104) und die optische Achse des Durchlichtbeleuchtungssystems (128) senkrecht zu einem Probenträger (130) stehen, auf dem die Probe (102) angeordnet werden soll.

10. Mikroskop (100, 500) mit schräger Ebene nach einem der vorhergehenden Ansprüche, wobei das Bildaufrichtungssystem (108) ein optisches Transportsystem (112, 512) umfasst, das ausgebildet ist, die Objektebene (106) auf eine Zwischenbildebene (116) abzubilden, sowie ein optisches Detektionssystem (114), das ausgebildet ist, das Zwischenbild auf die Bildebene (110) abzubilden, wobei sich die optischen Achsen (O1, O2) des optischen Transportsystems (112, 512) und des optischen Detektionssystems (114) in der Zwischenbildebene (116) unter einem Kippwinkel schneiden.

11. Mikroskop (100, 500) mit schräger Ebene nach Anspruch 10, wobei die optische Achse des optischen Detektionssystems (114) sowohl zur Zwischenbildebene (116) als auch zur Bildebene (110) senkrecht steht.

12. Mikroskop (100, 500) mit schräger Ebene nach einem der vorhergehenden Ansprüche, wobei eine optische Achse (O3) des Durchlicht-Beleuchtungssystems (128) nicht senkrecht zur Objektebene (106) ist.

13. Verfahren zum Betreiben eines Mikroskops (100, 500) mit schräger Ebene, wobei das Mikroskop (100, 500) mit schräger Ebene umfasst:
ein einzelnes Objektiv (104), das ausgebildet ist, ein Lichtblatt in eine Objektebene (106) einer Probe (102) zu projizieren und Erfassungslicht von der Objektebene (106) zu sammeln, die relativ zu einer optischen Achse (O1) des Objektivs (104) schräg ist, und
ein Bildaufrichtungssystem (108), das ausgebildet ist, das von dem Objektiv (104) gesammelte Erfassungslicht auf eine Bildebene (110) zu fokussieren, die relativ zu der optischen Achse (O1) des Objektivs (104) schräg verläuft, wobei das Verfahren die folgenden Schritte umfasst:
Emittieren von Beleuchtungslicht auf die Probe (102) mittels eines Durchlicht-Beleuchtungssystems (128), wobei das Durchlicht-Beleuchtungssystem (128) auf einer in Bezug auf das Objektiv (104) gegenüberliegenden Seite der Probe (102) angeordnet ist,
Sammeln des durch die Probe (102) transmittierten Beleuchtungslichts mit Hilfe des Objektivs (104) und
Fokussieren des vom Objektiv (104) gesammelten Durchlichtes mit Hilfe des Bildaufrichtungssystems (108) auf die Bildebene (110) zur Erzeugung eines Durchlichtkontrastbildes der Probe (102).

## Revendications

1. Microscope à plan oblique (100, 500) comprenant :
un objectif unique (104) configuré pour projeter une nappe de lumière dans un plan objet (106) d'un échantillon (102) et pour collecter la lumière de détection provenant du plan objet (106) qui est oblique par rapport à un axe optique (01) de l'objectif (104), et
un système de redressement d'image (108) configuré pour focaliser la lumière de détection collectée par l'objectif (104) sur un plan image (110) qui est oblique par rapport à l'axe optique (01) de l'objectif (104),
**caractérisé par** un système d'éclairage à lumière transmise (128) configuré pour émettre une lumière d'éclairage sur l'échantillon (102), ledit système d'éclairage à lumière transmise (128) étant situé sur un côté opposé de l'échantillon (102) par rapport à l'objectif (104),
dans lequel l'objectif (104) est en outre configuré pour collecter la lumière d'éclairage transmise à travers l'échantillon (102), et
dans lequel le système de redressement d'image (108) est en outre configuré pour focaliser la lumière d'éclairage transmise collectée par l'objectif (104) sur le plan image (110) afin de générer une image de contraste en lumière transmise de l'échantillon (102).

2. Microscope à plan oblique (100, 500) selon la revendication 1, dans lequel le système de redressement d'image (108) est configuré pour rendre les informations de phase et/ou les informations d'amplitude visibles dans l'image de contraste en lumière transmise.

3. Microscope à plan oblique (100, 500) selon la revendication 1 ou la revendication 2, comprenant en outre un processeur (132) configuré pour évaluer l'image de contraste en lumière transmise en termes d'informations de phase et/ou d'informations d'amplitude incluses dans l'image de contraste en lumière transmise.

4. Microscope à plan oblique (100, 500) selon l'une des revendications précédentes, comprenant en outre une pupille de détection asymétrique qui définit une plage angulaire de détection effective répartie de manière asymétrique par rapport à un axe optique (02) perpendiculaire au plan image (110) ou de manière asymétrique par rapport à un axe optique (01) de l'objectif 104.

5. Microscope à plan oblique (100, 500) selon la revendication 4, dans lequel le processeur (132) est configuré pour déterminer les caractéristiques d'imagerie du microscope à plan oblique représentées par une fonction de transfert de phase et/ou une fonction de transfert d'amplitude en tenant compte de la pupille de détection asymétrique, et pour évaluer l'image de contraste en lumière transmise sur la base des caractéristiques d'imagerie.

6. Microscope à plan oblique (500) selon l'une des revendications précédentes, comprenant en outre un élément optique (530) configuré pour faire varier un azimut de détection du plan objet oblique (106) qui est imagé sur le plan image (110).

7. Microscope à plan oblique (500) selon l'une des revendications précédentes, comprenant en outre un dispositif de balayage (522) configuré pour balayer le plan objet oblique (106), qui est imagé sur le plan image (110), à travers l'échantillon (102) pour générer une pile d'images de contraste en lumière transmise.

8. Microscope à plan oblique (500) selon la revendication 7, dans lequel le dispositif de balayage (522) est configuré pour générer une première pile d'images de contraste en lumière transmise en fonction d'un premier azimut de détection et pour générer une deuxième pile d'images de contraste en lumière transmise en fonction d'un deuxième azimut de détection qui est différent du premier azimut de détection, et dans lequel le processeur (132) est configuré pour déterminer une distribution tridimensionnelle de l'indice de réfraction de l'échantillon (102) sur la base des première et deuxième piles d'images de contraste en lumière transmise.

9. Microscope à plan oblique (100, 500) selon l'une des revendications précédentes, dans lequel l'axe optique (01) de l'objectif unique (104) et l'axe optique du système d'éclairage à lumière transmise (128) sont perpendiculaires à un support d'échantillon (130) sur lequel l'échantillon (102) doit être disposé.

10. Microscope à plan oblique (100, 500) selon l'une des revendications précédentes, dans lequel le système de redressement d'image (108) comprend un système de transport optique (112, 512) configuré pour imager le plan objet (106) sur un plan image intermédiaire (116) et un système de détection optique (114) configuré pour imager l'image intermédiaire sur le plan image (110), dans lequel les axes optiques (01, 02) du système de transport optique (112, 512) et du système de détection optique (114) se croisent dans le plan image intermédiaire (116) avec un angle d'inclinaison.

11. Microscope à plan oblique (100, 500) selon la revendication 10, dans lequel l'axe optique du système de détection optique (114) est perpendiculaire à la fois au plan image intermédiaire (116) et au plan image (110).

12. Microscope à plan oblique (100, 500) selon l'une des revendications précédentes, dans lequel un axe optique (03) du système d'éclairage à lumière transmise (128) est non perpendiculaire au plan objet (106).

13. Procédé de fonctionnement d'un microscope à plan oblique (100, 500), ledit microscope à plan oblique (100, 500) comprenant :
un objectif unique (104) configuré pour projeter une nappe de lumière dans un plan objet (106) d'un échantillon (102) et pour collecter la lumière de détection du plan objet (106) qui est oblique par rapport à un axe optique (01) de l'objectif (104), et
un système de redressement d'image (108) configuré pour focaliser la lumière de détection collectée par l'objectif (104) sur un plan image (110) qui est oblique par rapport à l'axe optique (01) de l'objectif (104),
dans lequel le procédé comprend les étapes suivantes :
émettre une lumière d'éclairage sur l'échantillon (102) au moyen d'un système d'éclairage à lumière transmise (128), ledit système d'éclairage à lumière transmise (128) étant situé sur un côté opposé de l'échantillon (102) par rapport à l'objectif (104),
collecter la lumière d'éclairage transmise à travers l'échantillon (102) au moyen de l'objectif (104), et
focaliser la lumière d'éclairage transmise collectée par l'objectif (104) au moyen du système de redressement d'image (108) sur le plan image (110) pour générer une image de contraste en lumière transmise de l'échantillon (102) .
